Europäisches Patentamt

European Patent Office

Office européen des brevets

(19)

(11) Publication number: **0 018 346**
**B1**

(12) **EUROPEAN PATENT SPECIFICATION**

(45) Date of publication of patent specification: **21.03.84**

(51) Int. Cl.³: **B 27 C 9/02,** B 27 F 5/02

(21) Application number: **80870024.9**

(22) Date of filing: **18.04.80**

(54) **Guide arrangement for a tool holder unit in a woodworking machine.**

(30) Priority: **23.04.79 BE 1009365**

(43) Date of publication of application:
**29.10.80 Bulletin 80/22**

(45) Publication of the grant of the patent:
**21.03.84 Bulletin 84/12**

(84) Designated Contracting States:
**AT BE DE FR GB IT NL SE**

(56) References cited:
**CH - A - 359 875**
**DE - C - 866 438**
**FR - A - 685 668**
**FR - A - 2 272 789**
**US - A - 2 071 005**
**US - A - 2 811 182**

(73) Proprietor: **BEKAERT ENGINEERING**
**Leo Bekaertstraat 1**
**B-8550 Zwevegem (BE)**

(72) Inventor: **de Muynck, Gabriel**
**Stationsstraat 120**
**B-8850 Ardooie (BE)**

(74) Representative: **Lombaerts, Jozef et al,**
**N.V. Bekaert S.A. Leo Bekaertstraat 1**
**B-8550 Zwevegem (BE)**

Courier Press, Leamington Spa, England.

Guide arrangement for a tool holder unit in a woodworking machine.

The invention relates to a guide arrangement for a tool holder unit a woodworking machine. The arrangement is mounted on a machine frame as described in BE—A—875.769 and can guide a tool holder as described in BE—A—875.771.

The cutting tools provided on such arrangements are suitable for cutting, drilling, sawing, boring and other shaping operations. Preferably the guide arrangement is adapted for making connecting elements like dowels and dowel holes on wooden workpieces for furniture frames.

The US—A—2071.005 discloses a woodworking machine with manually controlled positioning and power driven cutting tool. A reciprocating movement of the tool is not provided. The FR—A—685.668 discloses a woodworking machine for boring longitudinal dowel holes, imparting a lateral reciprocating movement to the rotating cutting tool by the use of an eccentric drive. The guiding means however do not provide a smooth functioning. The machine has a poor directional capability.

The DE—C—866.438 describes in detail the positioning control back and forward of a machining tool by using a double compartment pressure cylinder. The movement of the pneumatic pressure cylinder is dampened by the hydraulic compartment. It is not suggested that this apparatus can stand a lateral reciprocating movement.

A device for motion transmission is disclosed in US—A—3.703.834. The device generates a planar loop movement of a block-member actuated over two guideways perpendicular to each other. The device contains two cams and a connecting rocker arm. Such a cam device is noisy and represents maintenance problems for the control of close tolerances.

The use of a guide arrangement according to the invention makes it much easier to programme the cutting sequences whereby it is sufficiently flexible to be set for any specific shaping job, more particularly for finishing connection elements such as longitudinal and circular dowel holes. This setting is possible without the use of an existing model or template. The positioning of the guide arrangement has an improved flexibility and the adjustment operations avoid a time consuming resetting. The combination of different guide arrangements which can simultaneously as well as consecutively perform the imposed operations. As a result of its design, the guide arrangement shows a very limited width and several arrangements can be positioned close or opposite to each other.

The guide arrangement according to the invention is suitable for the automation of the adjustment operations which are normally carried out manually.

The invention relates to a guide arrangement for a tool holder unit in a woodworking machine, which arrangement is connected on an alignment surface of the machine frame, contains driving means for different components including the tool holder and also contains operating means in order to have the tool holder unit movable by translation in two directions perpendicular to each other and by rotation around two axes coincident with said translation directions whereby the tool holder unit is movable in a direction perpendicular to the feed directional movement of positioning means of the tool holder unit and whereby an eccentric drive block is connected with the tool holder unit by two slide bearings in planes perpendicular to each other so that rotation of the eccentric drive block is converted into a translational reciprocating movement of the tool holder unit.

The tool holder unit feed translation is obtained with additional assistance of a positioning pressure cylinder set. Preferably, this positioning pressure cylinder set is connected to the tool holder unit so as to be laterally reciprocably therewith.

In the illustrated embodiment of the invention, the tool holder unit is axially offset from its rotation axis.

The preferred embodiment of the arrangement contains a feed direction and a reciprocal guiding system of the tool holder unit based on three sets of at least two cylinder glide bearings disposed in three planes perpendicular to each other.

The design of the preferred arrangement comprises four structural parts:

— the first part contains a clamping member for the connection to the machine frame and means to provide a first translation of the tool holder unit and the connection to second part of the arrangement.

— the second part contains a pivotable connection to the first part, a sleeved bearing housing, means to provide a second translation perpendicular to the first translation, means to provide a second rotation and whose axis is coincident with the second translation an eccentric drive block and a support members for the third part of the arrangement.

— the third part is slidably supported by the second part, has a continuous reciprocating movement and provides a feed directional translation of the tool holder unit parallel to the second translation. This part supports the fourth part of the arrangement.

— the fourth part comprises the tool holder unit.

The construction and design of a guide arangement will be explained in the following description with reference to the accompanying drawings.

Fig 1 is a partial side view of a guide arrangement.

Fig 2 is an additional side view complementary to Fig 1.

Fig 3 is a perspective view of a part of the operating elements for positioning the tool holder unit.

Fig 4 is a fragmentary sectional view of a rotating connection.

Fig 5 is a perspective view of the adjustable eccentric drive.

Fig 6 is a perspective view of the tool holder unit.

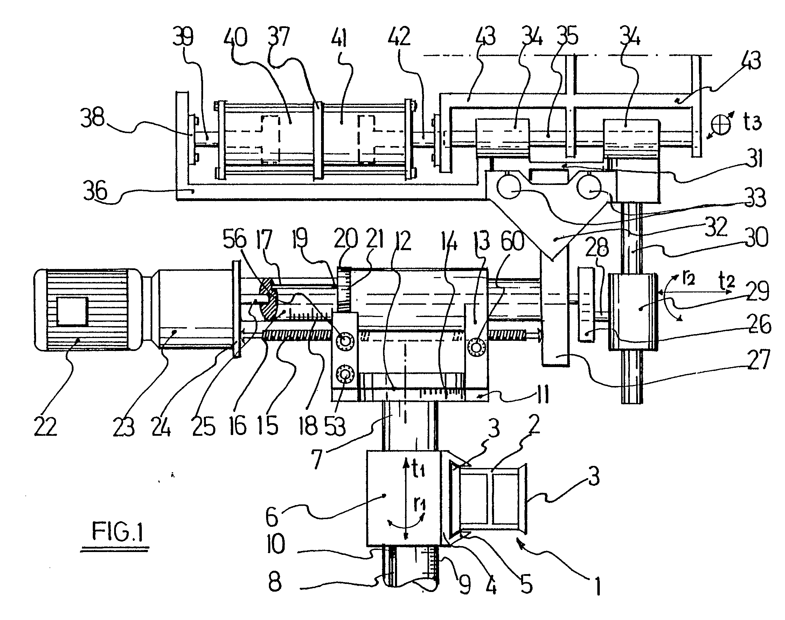

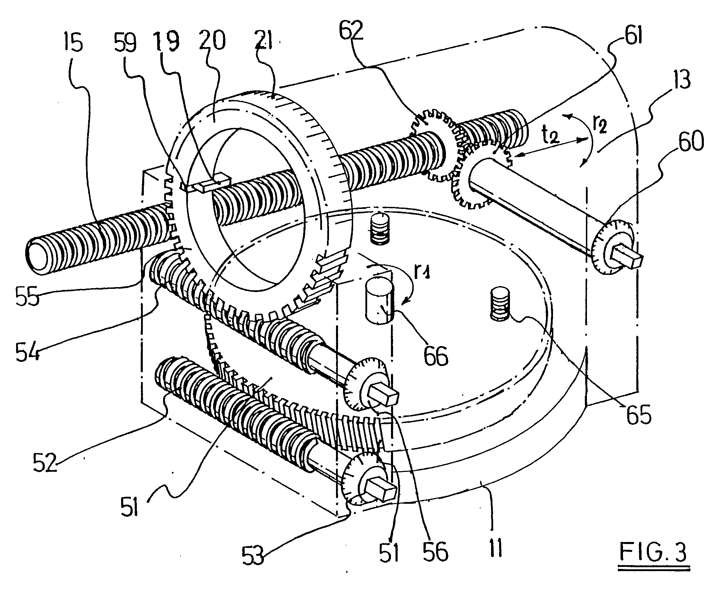

Figure 1 shows the set-up of a number of basic parts which provide the desired operation and positioning of the tool.

The beam 1 shown in cross-section is composed of a supporting portion 2 provided with alignment surfaces 3 with dovetail cross-sectional profiles which position the guide arrangement. The supporting plate 4 is clamped to an alignment surface 3 by means of projections 5 so that, if desired, it can be detached and moved. A sleeved bearing 6 supports and guides the tube 7 provided with key slot 8 and scale 9, which is slid into the bearing 6 and fixed in a given position. The key 10 in slot 8 and in the corresponding slot inside the sleeved bearing 6 prevents tube 7 from rotating. A pivot plate 11 is fixed perpendicular to the tube 7 to make the connection with the next part of the guide arrangement. The upper surface 12 of the pivot plate 11 forms the connection with a sleeved bearing housing 13. A gear 51 (shown in Figure 3) is connected with the pivot plate 11 and is incorporated into the sleeved bearing housing 13. A cavity contains the connecting appliance between the sleeved bearing housing 13 and the pivot plate 11 so that the housing 13 is able to rotate on the upper surface 12 around the tube 7. The setting can be read from scale 14.

The connecting structure and the possibilities of various settings of the structure are now further clarified also with reference to Figures 3 and 4.

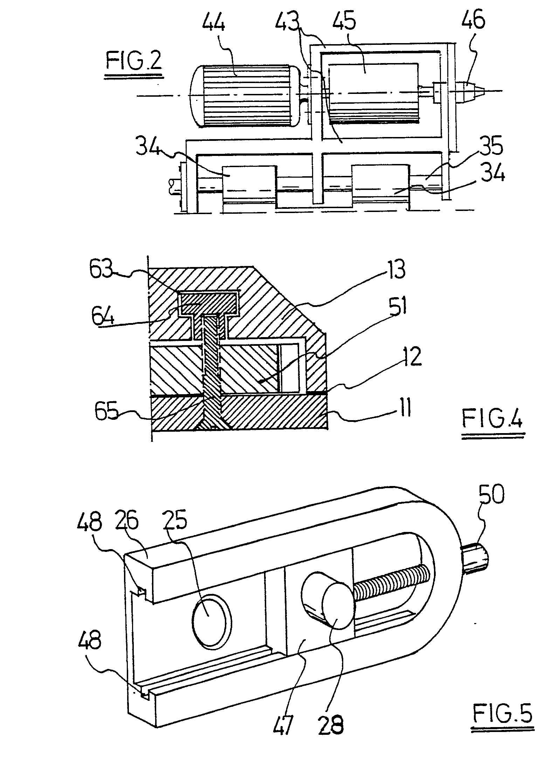

The sleeved bearing housing 13 cooperates with a screw-rod 15 for adjusting the mutual positions and guides a second tube 16 which also possesses a key slot 17 and scale 18. A corresponding key 19 and an embracing ring 20 with scale 21 permit the adjustment of the rotation of the tube 16 in the sleeved bearing. The ends of the screwrod 15 are only touching in gliding contact the flanged plate 24 and the front plate 27 so that rotation of tube 16 in the sleeved bearing housing 13 is possible. A motor 22 with transmission 23 is supported by a flanged plate 24 fixedly connected on the tube 16 and drives the central shaft 25 which coaxially extends through the tube 16 and commands the rotation of an eccentric block 26 at the front side of the front plate 27. The eccentric block 26 is further illustrated in Figure 5. It has the function of an eccentric crank-shaft drive. An eccentric pin 28 is supported in the central part of a double slide bearing 29 which slides over two parallel cylinders 30 giving a lateral reciprocating movement to these cylinders 30, to a table 31 which they support and to everything fixedly attached to the table 31.

Two cylindrical members 33 are clamped between triangular table supports 32 at both sides of the front plate 27. The triangular supports 32 are fixedly connected with the front plate 27. The members 33 support the table 31 which is slidably mounted thereon thus forming another slide bearing which permits the lateral reciprocating movement. A double support 34 constituting a slide bearing for a third pair of cylinders 35 is fixedly attached to the table 31 together with member 36 which serves as a support to a pressure cylinder set 37 which commands the rapid and slow movement of the tool holder shown in Figure 2.

A fast movement is controlled by pressurized air in a first compartment 40 of the cylinder 37 with the help of a flanged plate 38 and a first push rod 39. In a second compartment 41, an uncompressible fluid, such as oil, provides the fine adjustment of the position of the push rod 42 which is fixedly connected to the supporting crosshead 43 of the tool holder unit shown in Figure 2. The supporting crosshead 43 includes at least two cylinders 35 which are guided in the double support 34 constituting the slide bearing on table 31. This specific set-up diminishes the risk of jolting.

Figure 2 shows the assembly containing the tool holder. The supporting crosshead 43 supports the electric motor 44 which via a speed reducing transmission 45 drives the tool holder 46. The assembly containing the crosshead 43, the electric motor 44 with transmission 45 toolholder 46 and the cylinders 35 are for the purpose of this description defined as the toolholder unit.

Figure 3 is a perspective view of the rotational connection between the first and second part of the guide arrangement for a tool holder. The pivot plate 11 supports a gear wheel with helical teeth 51 which fits in the cavity of the sleeved bearing housing 13. (See also Fig. 4 for a detailed cross-section.)

By means of a worm 52 operated by an adjusting knob 53, an accurate positioning of the rotating sleeved bearing housing 13 can be achieved. Another rotational movement about an axis perpendicular to the axis preceding one is obtained by a second worm 54 and an appropriate toothed section on ring 20 operated by means of adjusting knob 56. The worm 54 engages the toothed section of ring 20 which is preferably, partly incorporated in the sleeved bearing housing 13 partially coinciding with the outer surface of housing 13 so that a scale 21 can be provided.

The innerside of the ring 20 is fitting the size of the tube 16 so that, by means of a key 19 in corresponding slots 59 and 17, tube 16 can slide in ring 20 thus permitting a translation of the eccentric drive appliance.

This additional translation is obtained by means of a third incorporated transmission wherein an adjusting knob 60 drives a bevel gear 61, which itself drives, at right angles to the gear 61, a second bevel gear 62 concentric with the screwrod 15. The gear 62 is suitably threaded at the inside so that when rotating it achieves a movement of the screwrod 15 and the tube 16 relative to the entire sleeved bearing housing 13.

The push rod 15 is in close fitting between flange plate 24 and the front plate 27 so that, when rotating worm 54 and tube 16 the ends of push rod 15 glide over the plates 24 and 27 and the tube 16 remains in the same position of scale 18.

Figure 4 shows a fragmentary cross-sectional view of a preferred connection between the pivot plate 11 and the sleeved bearing housing 13. The sleeved bearing housing 13 is provided with a sealing ring between the surface 12 of pivot plate 11 and gear 51. Also a concentric T-shaped slot 63 is provided in which curved T-shaped elements 64 fit which support the rotating sleeved bearing housing 13 at its underside. Pivot plate 11 and housing 13 can be clamped to each other by means of connecting screws 65. By means of a pin 66 on the plate 11 and corresponding pinhole in the housing 13 as shown in Figure 3, a stable concentric set-up can be achieved.

Figure 5 is a perspective detailed view of the eccentric drive for the reciprocating movement of the tool holder. The eccentric block 26 is fixedly connected to the rotating shaft 25 of tube 16. A cavity is recessed in the center of the block 26, in which a slide 47 is mounted in engagement with slots 48 in which it may be slid to provide for accurate adjustment of the slide 47.

The shaft distance of the pin 28 fixed on the slide 47 and the rotating shaft 25 is equal to the oscillation amplitude of the tool holder. This amplitude is set by a fine adjustment by means of screw 50 acting on slide 47. In order to eliminate the reciprocating movement, the amplitude is made equal to zero. Preferably the pin 28 is provided with a self adjusting needle bearing centrally located between the double slide bearing 29 to prevent vibration resulting from alignment errors.

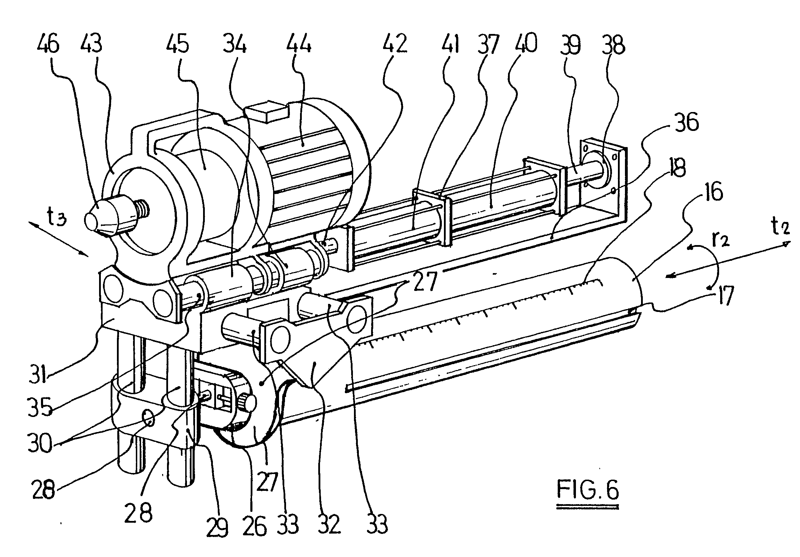

Figure 6 is a perspective view of a tool holder unit with its own drive arrangement feed directional movement drive and mechanism for the reciprocating movement. The reference number in the different figures correspond. The direct connection between motor 44, speed reducing transmission 45 and the tool holder 46 decreases the risk of vibration marks on the workpiece. When the eccentric block rotates, the tool holder unit 43—46 is driven as a single piece in a reciprocating movement on the slide bearing 33.

It is obvious that for the electric, pneumatic or hydraulic drive, the necessary conducts, connection boxes and valves, means for transmitting the control signals, positioning scales and indexes may be necessary, for example also to automate the adjustment operations which are normally carried out manually. For the sake of simplicity these components are not shown in the drawings.

**Claims**

1. A guide arrangement for a tool holder unit (43—46) in a woodworking machine, which arrangement is connected on an alignment surface (3) of the machine frame, contains driving means (20, 40, 44) for different components including the tool holder (46) and also contains means in order to have the tool holder unit (43—46) movable by translation in two directions (t1, t2) perpendicular to each other and by rotation (r1, r2) around two axes coincident with said translation directions (t1, t2) whereby the tool holder unit (43—46) is movable in a direction perpendicular to the feed directional movement of positioning means (42) of the tool holder unit characterized in that an eccentric drive block (26) is connected with the tool holder unit (43—46) by two slide bearings (29, 31) in planes perpendicular to each other so that the rotation of the eccentric drive block (26) is converted into a translational reciprocating movement (t3) of the tool holder unit (43—46).

2. Guide arrangement according to claim 1 characterized in that the feed directional translation (t2) of the tool holder unit (43—46) is obtained with additional assistance of a positioning pressure cylinder set (37).

3. Guide arrangement according to claim 2 characterized in that the positioning pressure cylinder set (37) is connected to the tool holder unit so as to be laterally reciprocably therewith.

4. Guide arrangement according to claim 2 characterized in that the tool holder unit (43—46) is axially offset from its rotation axis (r2).

5. Guide arrangement according to claim 1 or claim 2 characterized in that the feed directional and the reciprocal guiding system of the tool holder unit (43—46) contain a combination of three sets of at least two cylinder glide bearings (29, 31, 34) disposed in three planes perpendicular to each other.

**Revendications**

1. Dispositif de guidage pour bloc porte-outil de machines à bois, lequel dispositif est relié à une surface de centrage (3) du bâti de la machine, comporte des moyens de commande (20, 40, 44) pour différents organes, y compris le porte-outil (46) et comporte aussi des moyens qui permettent de mouvoir le bloc porte-outil (43—46) par translation dans deux directions (t1, t2) perpediculaires l'une à l'autre et par rotation (r1, r2) autour de deux axes coïncidant avec lesdites directions de translation (t1, t2), tandis que le bloc porte-outil (43—46) peut se mouvoir dans une direction perpendiculaire au mouvement directionnel d'entraînement des moyens de mise en position (42) du bloc porte-outil, caractérisé en ce qu'un bloc de commande excentrique (26) est relié au bloc porte-outil (43—46) par deux coussinets à glissière (29, 31) dans des plans perpendiculaires l'un à l'autre de telle sorte que la rotation du bloc de commande excentrique (26) se transforme en un mouvement translationnel alternatif (t3) du block porte-outil (43—46).

2. Dispositif de guidage suivant la revendication 1 caractérisé en ce que la translation directionelle d'entraînement (t2) du bloc porte-outil (43—46) est obtenue grâce à l'aide supplémentaire d'un jeu de cylindres presseurs de mise en position (37).

3. Dispositif de guidage suivant la revendication 2 caractérisé en ce que le jeu de cylindres presseurs de mise en position (37) est relié au bloc porte-outil de sorte à exécuter un mouvement latéralement alternatif avec ce dernier.

4. Dispositif de guidage suivant la revendication 2 caractérisé en ce que le bloc porte-outil (43—46) est axialement décalé par rapport à son axe de rotation (r2).

5. Dispositif de guidage suivant la revendication 1 ou la revendication 2 caractérisé en ce que le système d'entraînement directionnel et alternatif du bloc porte-outil (43—46) comporte une combinaison de trois jeux d'au moins deux coussinets coulissants à cylindre (29, 31, 34) dans trois plans perpendiculaires l'un à l'autre.

**Patentansprüche**

1. Führungseinrichtung für Werkzeughalter-Anlage (43—46) in einer Holzbearbeitungsmaschine, welche Einrichtung mit einer Richtfläche (3) des Maschinengestells verbunden ist, Antriebsmittel (20, 40, 44) für verschiedene Bestandteile einschließlich des Werkzeughalters (46), wie auch Mittel enthält um die Werkzeughalter-Anlage (43—46) geradlinig in zwei senkrecht aufeinanderstehende Richtungen (t1, t2), bzw. durch Drehung (r1, r2) um zwei mit genannten geradlinigen Bewegungsrichtungen (t1, t2) zusammenfallende Achsen bewegen zu können, während die Werkzeughalter-Anlage (43—46) in eine Richtung senkrecht zur Speiserichtungsbewegung von Anordnungsmitteln (42) der Werkzeughalter-Anlage bewegbar ist, dadurch gekennzeichnet, daß ein exzentrischer Treibblock (26) mit der Werkzeughalter-Anlage (43—46) durch zwei Gleitlager (29, 31) in senkrecht aufeinanderstehenden Flächen verbunden ist, so daß die Drehung des exzentrischen Treibblockes (26) in eine geradlinige Hin- und Herbewegung (t3) der Werkzeughalter-Anlage (43—46) umgewandelt wird.

2. Führungseinrichtung nach Anspruch 1, dadurch gekennzeichnet, daß die geradlinige Speiserichtungsbewegung (t2) der Werkzeughalter-Anlage (43—46) mit zusätzlicher Hilfe eines Anordnungs-Druckzylindersatzes (37) bekommen wird.

3. Führungseinrichtung nach Anspruch 2, dadurch gekennzeichnet, daß der Anordnung-Druckzylindersatz (37) in solcher Weise mit der Werkzeughalter-Anlage verbunden ist, daß eine seitliche Hin- und Herbewegung damit ausgeführt wird.

4. Führungseinrichtung nach Anspruch 2, dadurch gekennzeichnet, daß die Werkzeughalter-Anlage (43—46) in bezug auf ihre Drehachse (r2) axial verstellt ist.

5. Führungseinrichtung nach Anspruch 1 oder 2, dadurch gekennzeichnet, daß das Speiserichtungs-, und das hin- und herbewegende Führungssystem der Werkzeughalter-Anlage (43—46) eine Kombination von drei Sätzen von mindestens zwei Zylindergleitlagern (29, 31, 34) umfaßt, die in drei senkrecht aufeinanderstehenden Flächen angeordnet sind.

FIG.1

0 018 346

0 018 346

FIG.3

FIG.2

44 43 45 46

34 35 34

63 13

64 51

65 12 11 FIG.4

48 26 25 50

48

48 47 28 FIG.5

FIG.6

0 018 346